# FASCICULE DE BREVET EUROPEEN

(11) **EP 4 285 095 B1**
(45) Date de publication et mention de la délivrance du brevet: **05.11.2025**
(21) Numéro de dépôt: 22706072.0
(22) Date de dépôt: 26.01.2022
(51) Int. Cl.: G01N 15/02, G01N 15/06, G01N 21/94

(54) **PROCÉDÉ DE DÉTERMINATION EN TEMPS RÉEL ET EN CONTINU D'UN TAUX DE PARTICULES D'UN MATÉRIAU DONNÉ**
VERFAHREN ZUR KONTINUIERLICHEN ECHTZEITBESTIMMUNG EINER PARTIKELMENGE EINES BESTIMMTEN MATERIALS
METHOD FOR DETERMINING, IN REAL TIME AND CONTINUOUSLY, AN AMOUNT OF PARTICLES OF A GIVEN MATERIAL

(30) Priorité: 29.01.2021 FR 2100900
(43) Date de publication de la demande: 06.12.2023
(73) Titulaire: UBY, 75008 Paris (FR); ELLONA, 31400 Toulouse (FR)
(72) Inventeur: MAREUGE, Laurent, 78160 MARLY-LE-ROI (FR); ROMANYTSIA, Ivan, 31300 TOULOUSE (FR)
(74) Mandataire: Regimbeau
(86) Numéro de dépôt international: PCT/FR2022/050138
(87) Numéro de publication internationale: WO 2022/162307

(56) Documents cités:
- WO-A1-2019/232450
- CN-B- 104 198 342
- US-A1- 2015 068 806
- US-A1- 2016 041 074

## Description

### DOMAINE DE L'INVENTION

La présente invention appartient au domaine de la surveillance de la qualité de l'air, et concerne un procédé de détermination en temps réel et en continu d'un taux de particules d'un matériau donné dans un échantillon, et un système de détermination en temps réel et en continu d'un taux de particules d'un matériau donné dans un échantillon. La présente invention peut plus particulièrement être utilisée pour déterminer en temps réel et en continu le taux de silice cristalline alvéolaire émise par une opération de chantier.

### ETAT DE LA TECHNIQUE

La qualité de l'air est impactée par le type et le nombre de particules en suspension dans l'air. La qualité de l'air peut avoir des conséquences sur la santé des personnes respirant cet air, notamment lorsque certaines particules potentiellement nocives sont présentes dans l'air.

En particulier, sur les chantiers, la qualité de l'air est susceptible d'être détériorée du fait de l'émission de poussières contenant des particules de certains matériaux, qui peuvent présenter des dangers pour les opérateurs lorsqu'ils les respirent pendant une durée prolongée. Par exemple, des poussières de silice cristalline alvéolaire, des poussières de ballast, de la chaux, d'autres liants hydrauliques, des poussières de terre polluée, des particules de chrome VI, ou des particules de diesel, sont susceptibles d'être émises par différentes opérations de chantiers.

Certains types de particules, telles que la silice cristalline alvéolaire, présentent un risque sanitaire particulièrement élevé, avec des effets néfastes pour la santé. La silice cristalline est qualifiée d'alvéolaire lorsque les particules inhalées ont un diamètre inférieur à 10 µm, ce qui leur permet d'atteindre les alvéoles pulmonaires et de provoquer des pathologies type silicose ou cancer. Les travaux exposants à la poussière de silice cristalline alvéolaire sont classés parmi les activités cancérigènes à compter du 1^{er} janvier 2021.

Il est donc important de surveiller la qualité de l'air, c'est-à-dire d'identifier et de déterminer le taux de particules d'un matériau donné, afin de mettre en place des mesures de protection des opérateurs travaillant sur les chantiers qui soient adaptées en fonction du type et de la quantité des particules émises.

Des procédés actuels de surveillance de la qualité de l'air consistent à effectuer des prélèvements ponctuels d'échantillons sur un chantier. Ces prélèvements sont ensuite testés en laboratoire, leur analyse chimique permettant de déterminer le taux de particules des matériaux donnés, par exemple de silice cristalline alvéolaire, dans l'échantillon.

Le prélèvement et l'analyse des échantillons représentent un processus complexe et long, de l'ordre d'au moins une journée de travail. Un dispositif est ainsi porté toute la journée par un opérateur, accumulant des particules pendant la journée, et est ensuite analysé le lendemain dans un laboratoire.

Par conséquent, ces procédés actuels ne permettent pas d'évaluer le risque, ni en continu ni en temps réel ni pour l'ensemble des opérations réalisées sur des chantiers, pour des opérateurs présents sur les chantiers. Les mesures de protection et d'alerte de l'opérateur ne peuvent donc pas être adaptées en fonction du taux réel de particules en temps réel et en continu. Il en résulte que l'opérateur peut être soumis à des taux de particules de matériaux potentiellement dangereux pour la santé, tels que la silice cristalline alvéolaire, les poussières de ballast, etc., pendant une durée relativement longue correspondant à la durée entre deux prélèvements. La gestion du risque sanitaire lié à l'exposition des opérateurs à des particules de certains types de matériaux est donc insatisfaisante.

Le document US 2015/068806 A1 décrit un procédé d'analyse non intrusive de composés présents dans des débris de forage. Le document US 2016/041074 A1 décrit un procédé d'analyse et de filtrage d'air au moyen d'unités de filtration qui adaptent le filtrage de l'air en fonction de l'analyse.

### EXPOSE DE L'INVENTION

Un objectif de l'invention est de proposer un procédé de détermination d'un taux de particules d'un matériau donné dans un échantillon qui soit plus performant que les procédés actuels, en particulier qui permette une détermination en temps réel et en continu du taux de particules du matériau donné dans un échantillon d'air.

Pour cela, l'invention décrit un procédé de détermination d'un taux de particules d'un matériau donné dans un échantillon d'air selon la revendication indépendante 1.

Certaines caractéristiques préférées mais non limitatives du procédé de détermination d'un taux de particules d'un matériau donné décrit ci-dessus sont les suivantes, prises individuellement ou en combinaison :
- le matériau donné est au moins l'un parmi de la silice cristalline alvéolaire, de poussières de ballast, de la chaux, des particules de diesel, des poussières de terre polluée, d'autres liants hydrauliques, des particules de Chrome VI, et/ou d'autres particules émises par différentes opérations de chantiers ;
- la signature de l'échantillon mesurée à l'étape E1 est fonction d'une taille et d'un nombre des particules présentes dans l'échantillon ;
- la signature de l'échantillon mesurée à l'étape E1 comprend un histogramme de répartition d'un nombre de particules dans l'échantillon en fonction de la taille des particules ;
- le type de l'échantillon identifié à l'étape E2 est défini par une nature de l'échantillon et une activité d'obtention de l'échantillon ;
- la signature de l'échantillon est mesurée périodiquement à l'étape E1 à chaque période de mesure, le type de l'échantillon est identifié périodiquement à l'étape E2 à chaque période de calcul et le taux de particules est déterminé périodiquement à l'étape E3 à chaque période de calcul ;
- la période de calcul est égale ou supérieure à la période de mesure, la période de mesure et la période de calcul sont comprises entre 1 seconde et 1 heure ;
- le procédé comprend en outre une étape E4 de détermination par l'unité de traitement d'une exposition aux particules du matériau donné à partir du taux de particules du matériau donné déterminé à l'étape E2 et d'un temps d'exposition auxdites particules du matériau donné ;
- le procédé comprend en outre une étape E5 d'alerte d'un utilisateur lorsque l'exposition aux particules du matériau donné dépasse un seuil d'exposition prédéterminé.

Selon un deuxième aspect, l'invention décrit également un système de détermination d'un taux de particules d'un matériau donné dans un échantillon d'air selon la revendication indépendante 10.

Le compteur optique peut être portatif.

Le système de détermination d'un taux de particules d'un matériau donné dans un échantillon décrit ci-dessus peut comprendre en outre des moyens de stockage configurés pour stocker les mesures effectuées par le compteur optique et/ou la base de données d'apprentissage et/ou la table de correspondance.

### DESCRIPTION DES FIGURES

D'autres caractéristiques, buts et avantages de la présente invention apparaîtront à la lecture de la description détaillée qui va suivre, donnée à titre d'exemple non limitatif, qui sera illustrée par les figures suivantes :
La figure 1 est un schéma bloc représentant différentes étapes d'un procédé de détermination d'un taux de particules selon un mode de réalisation de l'invention.
La figure 2 est un schéma bloc représentant différentes étapes d'un procédé de détermination d'un taux de particules selon un mode de réalisation de l'invention.
La figure 3 est un schéma bloc représentant différentes étapes d'un procédé de détermination d'un taux de particules selon un mode de réalisation de l'invention.
La figure 4 est un exemple d'histogramme de répartition d'un nombre de particules en fonction de leur taille.
La figure 5 est un schéma représentant différents éléments d'un système de détermination d'un taux de particules selon un mode de réalisation de l'invention.

### DESCRIPTION DETAILLEE DE L'INVENTION

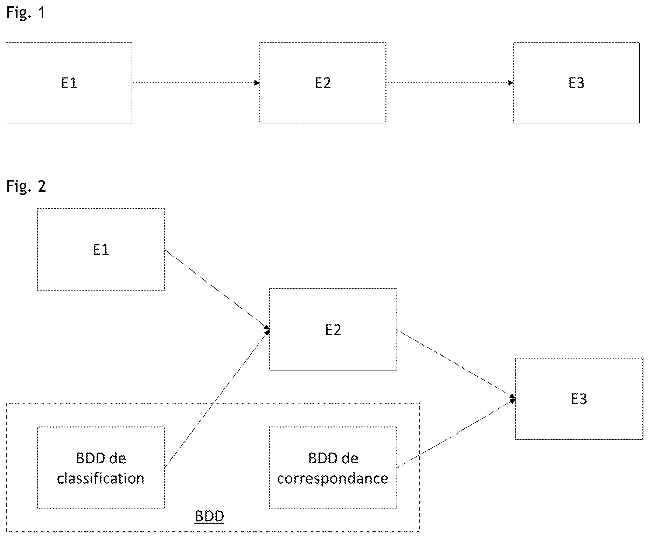

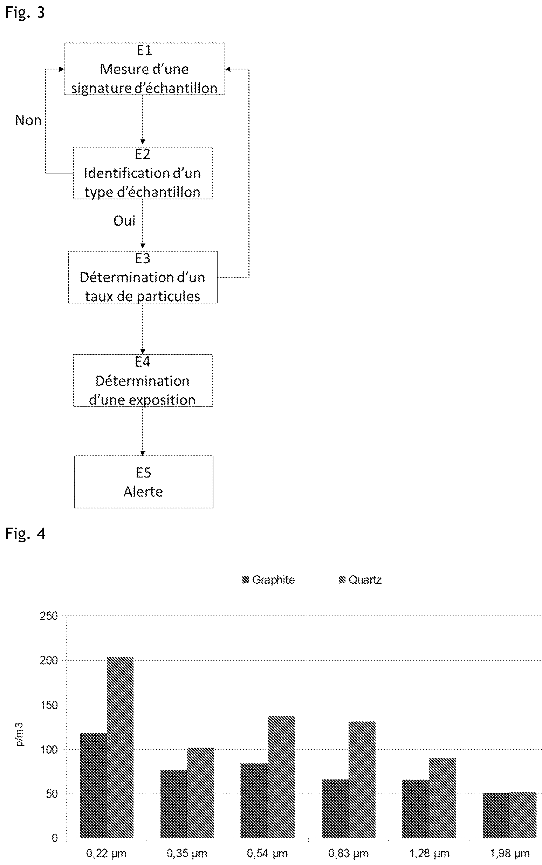

Un procédé de détermination en temps réel et en continu d'un taux de particules d'un matériau donné dans un échantillon, tel qu'illustré à titre d'exemple non limitatif en figure 1, en figure 2 et en figure 3, comprend des étapes de :
E1 : mesure optique d'une signature de l'échantillon ;
E2 : identification par une unité de traitement 20 d'un type de l'échantillon au moyen d'un modèle de classification entraîné sur une base de données d'apprentissage comprenant une pluralité de signatures de référence, chaque signature de référence étant associée à un type d'un échantillon de référence ; et
E3 : détermination par l'unité de traitement 20 du taux de particules du matériau donné dans l'échantillon à partir du type de l'échantillon identifié et d'une table de correspondance associant à chacun d'une pluralité de types d'échantillons de référence un taux de particules de référence du matériau donné.

Le procédé permet de déterminer un taux de particules d'un matériau donné présentes dans un échantillon, c'est-à-dire de différencier, au sein des particules présentes dans l'échantillon, les particules du matériau donné par rapport aux particules d'autres matériaux.

Par « échantillon », on comprendra qu'il s'agit d'un échantillon d'air susceptible de comprendre des particules en suspension, par exemple des particules de poussières ou de matériaux donnés, et qui peut notamment être respiré par un individu travaillant sur un chantier.

Bien entendu, plusieurs taux de particules de plusieurs matériaux donnés différents peuvent être déterminés à l'étape E3. Ainsi, les particules d'un ou de plusieurs matériaux potentiellement nocifs pour la santé peuvent être discriminées par rapport aux particules des autres matériaux ne présentant pas de danger pour la santé.

Le procédé peut être mis en œuvre par exemple sur des chantiers, pour améliorer la gestion du risque sanitaire des individus travaillant sur les chantiers, tels que les opérateurs ou les inspecteurs.

Le procédé permet de déterminer le taux de particules du matériau donné dans l'échantillon en temps réel et en continu. Par « en temps réel », on comprendra que ladite détermination est effectuée simultanément à l'exposition de l'individu aux particules du matériau donné, par exemple lors du travail de l'opérateur ou de l'inspecteur sur le chantier. Par « en continu », on comprendra que ladite détermination est effectuée de manière régulière au cours du temps, c'est-à-dire périodiquement, et à une période permettant l'adaptation rapide de mesures de protection en fonction du taux de particules du matériau donné déterminé, donc de l'exposition de l'individu aux particules du matériau donné. Par exemple, la détermination du taux de particules peut être effectuée pendant toute une journée de travail de l'individu, à une période de calcul comprise entre 1 seconde et 1 heure.

Ainsi, le risque résultant de l'exposition de l'individu aux particules du matériau donné peut être évalué en temps réel et en continu. Les mesures de protection et d'alerte de l'individu peuvent donc être adaptées en temps réel et en continu, ce qui permet d'éviter à l'individu d'être trop exposé aux matériaux potentiellement nocifs pour sa santé. La gestion du risque sanitaire lié à l'exposition des individus aux particules de certains matériaux est donc améliorée.

La détermination du type de l'échantillon est effectuée au moyen d'un modèle de classification. Cela permet d'identifier le type de l'échantillons avec une bonne fiabilité, du fait de l'entraînement du modèle de classification sur la base de données d'apprentissage.

De plus, l'attribution d'un type à l'échantillon peut être réalisée y compris dans des cas complexes ou l'échantillon ne correspond pas à un type d'échantillon de référence, mais à une combinaison de plusieurs types d'échantillons de référence, par exemple dans le cas de mélanges de poussières. Le modèle de classification permet ainsi d'isoler les différents types de poussières détectées. Ainsi, en fonction de la signature de l'échantillon mesurée à l'étape E1, l'identification du type de l'échantillon effectuée à l'étape E2 conduit à l'attribution à l'échantillon d'un type d'échantillon qui peut soit correspondre à un type de référence, soit correspondre à une combinaison de plusieurs types de référence.

Le matériau donné peut être la silice cristalline alvéolaire. Ainsi, le procédé permet de déterminer en temps réel et en continu le taux de silice cristalline alvéolaire émise par des opérations de chantier. En alternative ou en outre, le matériau donné peut être des poussières de ballast, de la chaux, d'autres liants hydrauliques, des poussières de terre polluée ou d'autres types de poussière, des particules de chrome VI**,** ou des particules de diesel, et/ou d'autres particules émises par différentes opérations de chantiers.

### Etape E1 : Mesure optique d'une signature de l'échantillon

La mesure optique de la signature de l'échantillon est réalisée à l'étape E1 en temps réel et en continu. Ainsi, les données de mesure reflètent la qualité de l'air effectivement respiré par l'individu, en particulier par l'opérateur lors de son travail sur le chantier, et l'évolution de cette qualité de l'air au cours du temps.

La signature de l'échantillon peut être mesurée périodiquement à l'étape E1 à chaque période de mesure. Ladite période de mesure peut être comprise entre 0,1 seconde et 10 heures, par exemple comprise entre 1 seconde et 1 heure, par exemple comprise entre 1 minute et 30 minutes, par exemple être égale à 15 minutes. Dans ce dernier cas, la signature de l'échantillon est mesurée toutes les 15 minutes.

La mesure de la signature de l'échantillon est réalisée au moyen d'un capteur optique 10 qui est un compteur optique configuré pour effectuer un comptage particulaire.

La signature de l'échantillon mesurée à l'étape E1 est fonction d'une taille et d'un nombre des particules présentes dans l'échantillon. La signature de l'échantillon dépend alors de la taille et du nombre des particules présentes dans l'échantillon.

La signature de l'échantillon mesurée à l'étape E1 comprend alors un histogramme de répartition d'un nombre de particules dans l'échantillon en fonction de la taille des particules, c'est-à-dire un histogramme de distribution en taille d'une fraction alvéolaire de particules de l'échantillon.

Une concentration des particules du matériau donné dans l'échantillon, exprimée par exemple en ppm ou en µg/m3, peut être déduite de l'histogramme de répartition du nombre de particules en fonction de leur taille. Par exemple, la concentration peut être déterminée en considérant que toutes les particules sont de forme sphérique, et en considérant des valeurs de densité de matériaux connues.

La signature de l'échantillon, en particulier l'histogramme de répartition du nombre de particules dans l'échantillon en fonction de leur taille, peut être mesurée dans une fourchette de taille de particules qui correspond à des particules de taille inférieure à 40 µm, par exemple de taille comprise entre 0,1 et 10 µm.

La fourchette de taille peut être divisée en plusieurs tranches, le nombre de particules étant mesuré dans chaque tranche de taille. Chaque tranche peut correspondre à un intervalle de taille d'environ 1 µm. La fourchette de taille peut être divisée en un nombre de tranches compris entre 2 et 40, par exemple en 24 tranches.

La figure 4 illustre un exemple d'histogramme de répartition d'un nombre de particules en fonction de leur taille. Les mesures sont effectuées pour une fourchette de taille de particules comprise entre 0,1 et 2 µm, la fourchette de taille étant divisée en 6 tranches, et pour des particules de graphite et de silice. La distribution de particules de graphite en fonction de leur taille est illustrée en noir, et la distribution de particules de silice en fonction de leur taille est illustrée en gris.

En alternative ou en outre, la signature de l'échantillon mesurée à l'étape E1 est fonction d'une forme de particules et d'un nombre de particules. Les particules d'un matériau donné sont alors discriminées par rapport aux particules d'autres matériaux présentes dans l'échantillon en fonction de leur forme, par exemple sphéroïde, lenticulaire, cubique, plate, de disque, cylindrique, etc. La signature de l'échantillon comprend alors une répartition d'un nombre de particules dans l'échantillon en fonction de leur forme.

En outre, la signature de l'échantillon mesurée à l'étape E1 peut être fonction d'un nombre de particules présentes dans l'échantillon et d'une dimension des dimensions des particules dans une direction (par exemple la direction de la plus grande dimension de la particule), deux directions, ou trois directions orthogonales formant un espace tridimensionnel. Les dimensions d'une particule dans trois directions sont la largeur, la profondeur, et la hauteur d'une particule.

La forme des particules des matériaux présents dans l'échantillon peut être déterminée en fonction de la ou des dimensions des particules mesurées dans la signature de l'échantillon. Par exemple, une forme sphérique ou cubique d'une particule peut être identifiée lorsque les trois dimensions de la particule sont sensiblement égales, c'est-à-dire lorsque la particule présente une largeur, une profondeur et une hauteur identiques.

Une forme plate ou de disque d'une particule peut être identifiée lorsque la hauteur de la particule est largement inférieure à la largeur et à la profondeur de la particule, la largeur et la profondeur de la particule étant par ailleurs sensiblement égales ou la largeur ne mesurant pas plus du double de la profondeur de la particule, par exemple lorsque la hauteur de la particule est inférieure à la largeur et à la profondeur de la particule d'au moins un facteur deux ou d'au moins un facteur dix.

Une forme cylindrique disque d'une particule peut être identifiée lorsque la hauteur de la particule est largement supérieure à la largeur et à la profondeur de la particule, la largeur et la profondeur de la particule étant par ailleurs sensiblement égales ou la largeur ne mesurant pas plus du double de la profondeur de la particule, par exemple lorsque la hauteur de la particule est supérieure à la largeur et à la profondeur de la particule d'au moins un facteur deux ou d'au moins un facteur dix.

En alternative ou en outre, la signature de l'échantillon mesurée à l'étape E1 peut être fonction d'un nombre de particules présentes dans l'échantillon et d'une couleur, c'est-à-dire d'une longueur d'onde, des particules. La longueur d'onde de la lumière visible est comprise sensiblement entre 380 nm pour le violet et 780 nm pour le rouge.

En alternative ou en outre, la signature de l'échantillon mesurée à l'étape E1 peut être fonction d'un nombre de particules présentes dans l'échantillon et de propriétés de diffractions des particules, par exemple d'une intensité de diffusion des particules et/ou d'un angle de diffusion des particules. L'intensité de diffusion traduit le niveau de diffraction de la lumière dans une direction donnée par une particule éclairée par une lumière incidente, et l'angle de diffusion correspond à la direction donnée dans laquelle est mesurée la diffraction.

Le tableau ci-dessous illustre un exemple non limitatif de signatures de référence mesurées pour trois aérosols différents, les signatures de référence étant fonction des dimensions et des formes des particules, d'une couleur des particules, d'une intensité de diffusion des particules, et d'un angle de diffusion des particules.

La mesure d'une signature de l'échantillon qui dépend d'un nombre de particules présentes dans l'échantillon en fonction d'une taille, d'une forme, d'une dimension, d'une couleur, et/ou de propriétés de diffraction des particules présentes dans l'échantillon, permet de réaliser le procédé de détermination du taux de particules au moyen d'un appareil miniature, portable, autonome et attaché à l'opérateur, et par un opérateur n'ayant pas de qualification particulière. Le procédé est ainsi simplifié, et ses coûts sont diminués.

**[Table 1]**

| Signature de l'échantillon de référence | Dimensions des particules | | | Formes des particules | Propriétés de diffraction des particules | | Couleur des particules |
|---|---|---|---|---|---|---|---|
| | X | Y | Z | | Intensité de diffusion (%) | Angle de diffusion (°) | Longueur d'onde (nm) |
| Aérosol 1 | 1 | 1 | 1 | Sphérique / cubique | 10 | 60 | 250 |
| Aérosol 2 | 1 | 5 | 6 | Plate / Disque | 10 | 20 | 600 |
| Aérosol 3 | 10 | 1 | 1 | Cylindrique | 10 | 180 | 250 |

Les dimensions des particules de l'échantillon dans le tableau ci-dessous sont indiquées en tant que grandeurs relatives, donc sans unités. Une particule de l'échantillon présente une taille donnée qui appartient à une classe de taille bin 00 - bin XX. La taille d'une particule est une taille aérodynamique exprimée en micromètres µm ou en nanomètres nm.

Par exemple :
- la classe bin 01 peut correspondre à une taille aérodynamique de particule d'environ 0,5 µm, avec X = 0,1 µm, Y = 0,5 µm, et Z = 0,5 µm, ce qui correspond à une forme plate ou de disque des particules ;
- la classe bin 01 peut correspondre à une taille aérodynamique de particule d'environ 0,5 µm, avec X = 0,5 µm, Y = 0,5 µm, et Z = 0,5 µm, ce qui correspond à une forme sphérique ou cubique des particules ;
- la classe bin 02 peut correspondre à une taille aérodynamique de particule d'environ 1 µm, avec X = 1 µm, Y = 0,3 µm, et Z = 0,2 µm, ce qui correspond à une forme cylindrique des particules ;
- la classe bin 02 peut correspondre à une taille aérodynamique de particule d'environ 1 µm, avec X = 0,2 µm, Y = 1 µm, et Z = 1 µm, ce qui correspond à une forme plate ou de disque des particules ;
- etc.

En résumé, la signature de l'échantillon mesurée à l'étape E1 est fonction d'un nombre de particules présentes dans l'échantillon et :
- d'une taille, et/ou
- d'une forme,

des particules présentes dans l'échantillon,
et peut en outre être fonction d'un nombre de particules présentes dans l'échantillon et :
   - d'une dimension, et/ou
   - d'une couleur, et/ou
   - de propriétés de diffraction,
des particules présentes dans l'échantillon.

### Etape E2 : Identification par une unité de traitement 20 d'un type de l'échantillon

Dans un premier mode de réalisation, illustré à titre d'exemple non limitatif en figure 2, l'identification du type de l'échantillon lors de l'étape E2 comprend une comparaison de la signature de l'échantillon avec une pluralité de signatures de référence stockées dans la base de données d'apprentissage, chaque signature de référence étant associée à un type d'échantillon de référence.

La base de données d'apprentissage est consultée à chaque identification du type d'échantillon.

Pour déterminer le type de l'échantillon, la signature de l'échantillon est comparée avec plusieurs, en particulier avec chacune, des signatures de référence stockées dans la base de données d'apprentissage.

Le modèle de classification est un modèle de type des k plus proches voisins. Les k types des échantillons de référence dont les signatures de référence sont les plus proches de la signature de l'échantillon mesurée, selon une distance déterminée, sont pris en compte pour déterminer le type de l'échantillon. La valeur de k peut être comprise entre 1 et N, N correspondant au nombre d'échantillons dans la base de données de classification. Par exemple, la valeur k peut être comprise entre 1 et 10, par exemple être égale à 5.

Dans un premier exemple de réalisation, le type de l'échantillon déterminé à l'étape E2 correspond au type d'échantillon de référence le plus représenté parmi les k échantillons de référence dont les signatures de référence sont les plus proches de la signature mesurée à l'étape E1.

Dans un deuxième exemple de réalisation, le type de l'échantillon déterminé à l'étape E2 correspond à une combinaison des types des k échantillons de référence dont les signatures de référence sont les plus proches de la signature mesurée à l'étape E1, par exemple en attribuant à chaque échantillon de référence parmi les k échantillons de référence les plus proches un poids identique, ou un poids variable en fonction de la distance de leurs signatures de référence respectives à la signature de l'échantillon mesuré à l'étape E1.

Le procédé peut comprendre une étape de détermination d'un type d'échantillon inconnu lorsque toutes les distances entre les signatures des échantillons de référence et la signature mesurée à l'étape E1 sont supérieures à une certaine distance seuil.

Dans un deuxième mode de réalisation, le modèle de classification est un modèle de type réseau de neurones, machine à vecteur de support, algorithme du gradient stochastique, ou algorithme des forêts aléatoires.

Le procédé comprend alors une étape préalable d'apprentissage du modèle de classification à partir de la base de données d'apprentissage.

Une fois l'apprentissage effectué, la détermination du type de l'échantillon peut être effectuée pour une signature d'échantillon mesurée à l'étape E1 par l'intermédiaire du modèle de classification élaboré lors de l'apprentissage, sans nécessiter de consultation de la base de données d'apprentissage.

Le modèle de classification peut comprendre un élagage alpha-bêta.

Dans le premier mode de réalisation et dans le deuxième mode de réalisation, la base de données d'apprentissage comprend une pluralité de signatures de référence, chaque signature de référence correspondant à un type d'un échantillon de référence, qui peut être obtenu lors d'une opération spécifique.

Chaque signature de référence peut correspondre à un histogramme de référence de répartition d'un nombre de particules dans l'échantillon de référence en fonction d'une taille de particules et/ou d'une forme de particules et/ou d'une dimension de particules et/ou d'une couleur de particules et/ou de propriétés de diffraction de particules.

Chaque signature d'un échantillon de référence peut correspondre à un vecteur, dans un espace de caractéristiques multidimensionnel construit grâce à l'histogramme de distribution en taille et/ou en forme et/ou en dimension et/ou en couleur et/ou en propriétés de diffraction des particules dans l'échantillon de référence, chaque vecteur correspondant à un type de l'échantillon de référence.

L'information concernant la dimension, la couleur, et/ou les propriétés de diffraction des particules, peut être indépendamment obtenue pour chaque classe de taille bin 00- bin XX des particules dans l'échantillon, ou être obtenue seulement pour certaines des classes de taille bin 00 - bin XX.

En résumé, la signature de l'échantillon mesurée à l'étape E1 comprend:
- un histogramme de répartition d'un nombre de particules dans l'échantillon en fonction de la taille des particules, et/ou
- un histogramme de répartition d'un nombre de particules dans l'échantillon en fonction de la forme des particules,
et peut en outre comprendre:
- un histogramme de répartition d'un nombre de particules dans l'échantillon en fonction de la dimension des particules, et/ou
- un histogramme de répartition d'un nombre de particules dans l'échantillon en fonction de la couleur des particules, et/ou
- un histogramme de répartition d'un nombre de particules dans l'échantillon en fonction des propriétés de diffraction des particules.

La signature de l'échantillon mesurée à l'étape E1 correspond à un vecteur non étiqueté, qui est dans le premier mode de réalisation comparé aux vecteurs correspondant aux signatures de référence des échantillons de référence de la base de données d'apprentissage.

Un type de l'échantillon de référence peut être défini par une nature de l'échantillon de référence et une activité d'obtention de l'échantillon de référence. En effet, la nature et/ou l'activité d'obtention d'un échantillon de référence impacte sa signature, en particulier peut impacter la distribution en taille et en nombre de particules dans l'échantillon de référence, et/ou le taux de particules d'un matériau donné dans l'échantillon de référence.

La nature de l'échantillon de référence peut correspondre à un matériau de l'échantillon de référence, tel que la brique, le marbre, le béton, le quartz, le type de poussières, etc., plus particulièrement à un matériau dont est issue la poussière contenue dans l'échantillon.

L'activité d'obtention de l'échantillon de référence peut correspondre à une activité suite à laquelle l'échantillon de référence a été obtenu et/ou à un outil correspondant à ladite activité, par exemple un creusement, un ponçage, une découpe, une démolition, etc., au moyen d'une scie circulaire, d'une ponceuse, d'un marteau piqueur, etc.

Par exemple, un type d'échantillon de référence peut être une brique de ciment obtenue par sciage au moyen d'une scie circulaire, les poussières résultantes comprenant une fraction de mélange donnée de béton et de marbre.

Le type de l'échantillon identifié à l'étape E2 peut être défini par une nature de l'échantillon et une activité d'obtention de l'échantillon, le type de l'échantillon étant déterminé en fonction des types (nature et activité d'obtention) des échantillons de référence.

Plus la base de données d'apprentissage contient un nombre élevé de types d'échantillons de référence, plus le modèle de classification permettra de reconnaître un grand nombre de types d'échantillons de manière fiable et efficace.

La table de correspondance associe à une pluralité de types d'échantillons de référence des taux de particules de référence respectifs.

A chaque type d'échantillon de référence est associé au moins un taux de particules de référence d'au moins un matériau donné. A chaque type d'échantillon de référence peuvent être associés divers taux de particules de référence de divers matériaux donnés susceptibles de présenter un risque pour la santé d'un individu qui le respire. Par exemple, à chaque type d'échantillon de référence peuvent être associés un taux de silice cristalline alvéolaire, un taux de poussières de ballast, un taux de chrome **VI,** un taux de chaux, un taux de diesel, un taux de poussières de terre polluée, un taux d'autres liants hydrauliques, etc.

La base de données d'apprentissage et la table de correspondance peuvent correspondre à une base de données unique. Le tableau ci-dessous illustre un exemple non limitatif d'une base de données unique regroupant une base de données d'apprentissage associant à une signature de référence un type d'échantillon de référence, et une table de correspondance associant à chaque type d'échantillon de référence des taux de particules de plusieurs matériaux donnés.

**[Table 2]**

| Signature de l'échantillon de référence | Type de l'échantillon de référence | | Taux de particules dans l'échantillon de référence | | |
|---|---|---|---|---|---|
| | Activité d'obtention | Nature | Taux de Si alvéolaire | Taux de chrome VI | Taux de particules X |
| S1 | Creusement | A1 | a1 | b1 | c1 |
| S2 | Ponçage | A2 | a2 | b2 | c2 |
| S3 | Découpe | A3 | a3 | b3 | c3 |
| S4 | Démolition | A4 | a4 | b4 | c4 |
| ... | ... | ... | ... | ... | ... |

Un exemple de méthode de constitution de la base de données d'apprentissage et de la table de correspondance est décrit dans les paragraphes suivants.

Afin de constituer la base de données d'apprentissage, une pluralité d'échantillons de référence présentant des types de référence connus sont prélevés sur site. Une signature de référence correspondant à chaque échantillon de référence est établie, soit directement sur site, par exemple par le biais d'un capteur optique adapté pour effectuer un comptage particulaire, soit ultérieurement, par exemple par le biais d'une analyse en laboratoire.

Afin de constituer la table de correspondance, des taux de particules de divers matériaux donnés correspondant au type de l'échantillon de référence sont analysés, par exemple par le biais d'une analyse chimique effectuée en laboratoire, afin d'associer à chaque type d'échantillon de référence des taux de particules des divers matériaux donnés.

### Etape E3 : Détermination par l'unité de traitement 20 du taux de particules du matériau donné dans l'échantillon

Une fois le type de l'échantillon identifié, l'unité de traitement 20 détermine le taux de particules d'un matériau donné dans l'échantillon, en utilisant le taux de particules du matériau donné associé à chaque type d'échantillon de référence.

Le type de l'échantillon peut être identifié périodiquement à l'étape E2 à chaque période de calcul. Le taux de particules être déterminé périodiquement à l'étape E3 à chaque période de calcul.

La période de calcul peut être égale ou supérieure à la période de mesure. L'identification du type d'échantillon et/ou la détermination du taux de particules du matériau donné peuvent donc être réalisées à chaque mesure effectuée par le capteur optique 10, ou à des intervalles de temps plus espacés, de sorte à suivre en temps réel et en continu, donc de manière régulière au cours du temps, l'évolution du taux de particules du matériau donné dans l'échantillon.

La période de calcul peut être égale à la période de mesure. La période de calcul peut être comprise entre 0,1 seconde et 10 heures, par exemple comprise entre 1 seconde et 1 heure, par exemple comprise entre 1 minute et 30 minutes, par exemple être égale à 15 minutes.

En particulier, lorsque la période de mesure et la période de calcul sont toutes deux égales à 15 minutes, la signature de l'échantillon est mesurée toutes les 15 minutes, et le taux de particules du matériau donné est déterminé toutes les 15 minutes, c'est-à-dire à chaque mesure d'une signature d'un échantillon.

Lorsque la période de calcul est supérieure à la période de mesure, la signature de l'échantillon considérée pour déterminer le type de l'échantillon peut correspondre à une moyenne des signatures des échantillons obtenues à chaque période de mesure survenue pendant la période de calcul. Ainsi, l'autonomie du dispositif est améliorée, et les potentielles erreurs de mesure sont lissées.

### E4 : Détermination de l'exposition aux particules du matériau donné

Le procédé peut comprendre en outre une étape **E4** de détermination par l'unité de traitement 20 d'une exposition aux particules du matériau donné à partir du taux de particules du matériau donné déterminé à l'étape E2 et d'un temps d'exposition auxdites particules du matériau donné, ainsi qu'illustré à titre d'exemple non limitatif en figure 3.

L'exposition au type de matériau donné pendant une période de calcul peut être calculée en intégrant le taux de particules du matériau donné déterminé à l'étape E3 sur une durée correspondant à la période de calcul. L'exposition au type de matériau donné pendant le temps d'exposition déterminée à l'étape **E4** correspond à la somme des expositions pendant les périodes de calcul correspondant à ce temps d'exposition. Ainsi, l'exposition calculée à l'étape E4 tient compte de l'évolution dans le temps du taux de particules du matériau donné déterminé à l'étape E3.

Le temps d'exposition peut être supérieur ou égal à la période de calcul. Le temps d'exposition peut être défini en fonction du type et de la nocivité du matériau donné, et/ou en fonction de la rapidité d'adaptation des mesures de protection souhaitée. Ainsi, plus un temps d'exposition est court, plus la détermination de l'exposition est réalisée rapidement et avec finesse.

Le temps d'exposition peut être compris entre 0,1 seconde et 10 heures, par exemple compris entre 1 seconde et 1 heure, par exemple compris entre 1 minute et 30 minutes, par exemple être égal à 15 minutes.

Par exemple, si le temps d'exposition est égal à 1 heure et que la période de calcul est égale à 15 minutes, l'exposition est déterminée en faisant la somme, pour chacune des 4 périodes de calcul comprises dans le temps d'exposition, des taux de particules déterminés à chacune de ces 4 périodes de calcul.

En alternative ou en outre, une exposition prévisionnelle au type de particules de matériau donné peut être déterminée en multipliant le taux de particules du matériau donné déterminé pendant la période de calcul, par un temps d'exposition prévisionnel correspondant à plusieurs périodes de calcul. Ainsi, une exposition prévisionnelle au type de particules du matériau donné peut être calculée en avance de l'exposition réelle.

### E5 : Alerte d'un utilisateur

Le procédé peut comprendre en outre une étape E5 d'alerte d'un utilisateur lorsque l'exposition aux particules du matériau donné dépasse un seuil d'exposition prédéterminé, ainsi qu'illustré à titre d'exemple non limitatif en figure 3.

Le seuil d'exposition peut être défini en fonction du matériau donné, de son impact potentiel pour la santé de l'individu susceptible de le respirer, de normes de sécurité spécifiques, etc.

En alternative ou en outre, le procédé peut comprendre une étape E5' d'alerte d'un utilisateur lorsque le taux de particules déterminé à l'étape E3 au cours d'une période de calcul dépasse un seuil de taux prédéterminé.

Ainsi, un dépassement temporaire mais important d'un taux de particules du matériau donné, quel que soit le moment où le dépassement survient et la durée du dépassement, est identifié et l'utilisateur en est alerté, afin de pouvoir prendre des mesures de protection adéquates en temps réel et en continu.

En alternative ou en outre, le procédé peut comprendre une étape E5" d'alerte d'un utilisateur lorsque l'exposition prévisionnelle au type de particules de matériau donné dépasse un seuil d'exposition prédéterminé. Ainsi, des mesures de protection peuvent être prises avant que l'opérateur soit réellement soumis au seuil d'exposition.

### E6 : Transmission de données d'alerte

Le procédé peut comprendre en outre une étape E6 de transmission de données d'alerte. Les données d'alerte peuvent comprendre l'exposition déterminée à l'étape E5, E5', ou E5" et/ou le taux de particules déterminé à l'étape E3 pour chaque période de calcul et/ou les signatures mesurées à l'étape E1 pour chaque période de calcul.

Les données d'alerte peuvent être transmises lorsque l'exposition aux particules du matériau donné dépasse un seuil d'exposition prédéterminé, et/ou lorsque le taux de particules déterminé à l'étape E3 au cours d'une période de calcul dépasse un seuil de taux prédéterminé.

Les données d'alerte peuvent être transmises à un serveur distant, par le biais d'une connexion sans fil.

### Système de détermination en temps réel et en continu d'un taux de particules d'un matériau donné dans un échantillon

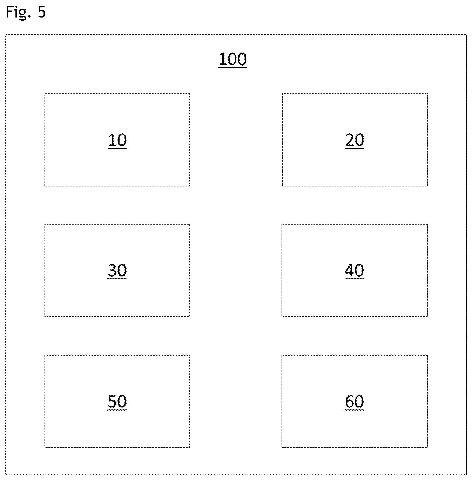

Un système de détermination en temps réel et en continu d'un taux de particules d'un matériau donné dans un échantillon comprend, ainsi qu'illustré à titre d'exemple non limitatif en figure 5 :
- un capteur optique 10 adapté pour mesurer une signature d'un échantillon ; et
- une unité de traitement 20 configurée pour :
   - identifier un type de l'échantillon au moyen d'un modèle de classification entraîné sur une base de données d'apprentissage comprenant une pluralité de signatures de référence, chaque signature de référence étant associée à un type d'un échantillon de référence, et
   - déterminer le taux de particules du matériau donné dans l'échantillon, à partir du type de l'échantillon identifié et d'une table de correspondance associant à chacun d'une pluralité de types d'échantillons de référence un taux de particules de référence du matériau donné.

Le système est adapté à la mise en œuvre du procédé décrit ci-dessus. Le système peut être un système d'identification et de détermination d'un taux de particules de silice cristalline alvéolaire émises par différentes opérations de chantiers. En alternative ou en outre, le système peut être un système d'identification et de détermination d'un taux de poussières de ballast, d'un taux de chaux, d'un taux de diesel, d'un taux de poussières de terre polluée, d'un taux d'autres liants hydrauliques, d'un taux de Chrome VI, et/ou d'un taux d'autres particules, émises par différentes opérations de chantiers.

Par « unité de traitement 20 », on comprendra qu'il peut s'agir de tout système permettant d'effectuer les traitements souhaités, par exemple d'une seule unité de traitement 20, ou de plusieurs unités de traitement 20 qui peuvent être contrôlées par une unité mère. L'unité de traitement 20 peut comprendre un ou plusieurs micro-processeur(s) adapté(s) pour traiter les données de mesure issues du capteur optique 10 en vue de déterminer le taux de particules du matériau donné dans l'échantillon.

Le modèle de classification, la base de données d'apprentissage, et la table de correspondance peuvent correspondre à celles décrites ci-dessus concernant le procédé de détermination d'un taux de particules du matériau donné dans un échantillon.

L'unité de traitement 20 peut en outre être configurée pour déterminer une exposition aux particules du matériau donné à partir du taux de particules du matériau donné déterminé et d'un temps d'exposition auxdites particules du matériau donné.

Le capteur optique 10 est un compteur optique de particules configuré pour effectuer un comptage particulaire. Plus particulièrement, le capteur optique 10 peut être configuré pour générer un histogramme de répartition d'un nombre de particules dans l'échantillon en fonction de la taille des particules. Une concentration des particules du matériau donné dans l'échantillon, exprimée par exemple en ppm ou µg/m3, peut être déduite de l'histogramme de répartition mesuré par le capteur optique 10. Par exemple, la concentration peut être déterminée en considérant que toutes les particules sont sphériques, et en considérant des valeurs de densité de matériaux connues.

Le capteur optique 10 peut être adapté pour mesurer avec précision la signature de l'échantillon, plus particulièrement la répartition du nombre de particules en fonction de leur taille, dans une fourchette de taille de particules qui peut correspondre à des particules de taille inférieure à 40 µm, par exemple comprise entre 0,1 et 10 µm.

Le capteur optique 10 peut être un micro-capteur. Le capteur optique 10 peut être un capteur optique 10 du type néphélomètre et diffraction laser. De tels compteurs optiques de particules sont robustes, précis et peu coûteux, et permettent d'effectuer des mesures fiables sur des types d'échantillon très variés, qu'ils proviennent de roches naturelles (granit, sable...) ou de matériaux transformés (béton, ciment, mortier).

Le capteur optique 10 peut être portatif. Par portatif, on comprendra que le capteur optique 10 n'est pas fixé à demeure sur le sol, peut être transporté, le capteur optique 10 présentant un poids et un encombrement modérés. En particulier, le capteur optique 10 peut être embarqué par un utilisateur tel qu'un individu travaillant sur un chantier, tel qu'un opérateur ou un inspecteur, sans représenter une gêne conséquente pour l'individu lors de son travail.

Les mesures effectuées par le capteur optique 10 peuvent être transmises à l'unité de traitement 20 qui peut être un serveur distant. En variante, l'unité de traitement 20 et le capteur optique 10 peuvent être intégrés dans un module portatif. L'exposition peut alors être évaluée à l'échelle personnelle.

En variante, le capteur optique 10 peut être stationnaire, c'est-à-dire être posté en un endroit donné du chantier. L'unité de traitement 20 peut être un serveur distant auquel les données de mesure sont envoyées pour être traitées. Le système comprend alors des moyens de transmission des données de mesure à l'unité de traitement 20. L'exposition peut alors être évaluée à l'échelle du chantier, le capteur optique 10 étant mis en œuvre de façon stationnaire.

Le système peut comprendre en outre des moyens de stockage 30 configurés pour stocker les mesures effectuées par le capteur optique 10. Les moyens de stockage 30 peuvent, en alternative ou en outre, être configurés pour stocker la table de correspondance et/ou la base de données d'apprentissage. Les moyens de stockage 30 peuvent en outre être adaptés pour stocker les données d'alerte, pendant une durée de stockage déterminée.

Les moyens de stockage 30 peuvent comprendre une carte électronique dédiée, telle qu'une carte SD de stockage. Une carte électronique dédiée consomme peu d'énergie, ce qui permet de préserver l'autonomie du système.

Le système peut comprendre en outre une unité d'alerte 40 adaptée pour alerter un utilisateur lorsque l'exposition aux particules du matériau donné dépasse un seuil d'exposition prédéterminé. L'unité d'alerte 40 peut correspondre à l'unité de traitement 20.

L'utilisateur alerté par l'unité d'alerte peut correspondre à l'utilisateur portant le système, par exemple un opérateur ou un inspecteur travaillant sur un chantier, ou un autre utilisateur, par exemple un responsable de l'opérateur ou un centre de contrôle du chantier.

Le système peut comprendre en outre une unité de transmission 50 adaptée pour transmettre des données d'alerte. L'unité de transmission 50 peut être configurée pour effectuer une transmission par le biais d'une connexion sans fil.

L'unité de transmission 50 peut en particulier comprendre un module émetteur permettant une transmission par le biais de technologies LPWAN, afin de limiter l'énergie consommée par la transmission et ainsi d'augmenter l'autonomie du système.

Le système peut comprendre en outre une batterie 60 adaptée pour fournir de l'énergie à l'unité de traitement 20 et/ou l'unité d'alerte 40 et/ou l'unité de transmission 50.

La batterie 60 peut comprendre une ou plusieurs piles non rechargeables montées en série, ou être rechargeable par un chargeur, la nature de la pile pouvant être choisie en fonction de l'autonomie souhaitée pour le système.

Le système peut comprendre en outre un boîtier 100. Le capteur optique 10 et l'unité de traitement 20 sont intégrés dans le boîtier 100. Le cas échéant, les moyens de stockage 30, l'unité d'alerte 40, l'unité de transmission 50 et/ou la batterie 60 peuvent également être intégrés dans le boîtier 100.

Le boîtier 100 peut être réalisé en matériau étanche, afin de protéger l'électronique du système des perturbations extérieures courantes sur les chantiers, telles que l'eau et la poussière. La fiabilité des mesures est accrue et la durée de vie des composants du dispositif en est améliorée.

Le boîtier 100 peut être portatif, afin de pouvoir être transporté par un utilisateur sans le gêner, le boîtier 100 présentant un poids et un encombrement modérés.

D'autres modes de réalisation peuvent être envisagés et une personne du métier peut facilement modifier les modes ou exemples de réalisation exposés ci-dessus ou en envisager d'autres tout en restant dans la portée de l'invention.

## Revendications

1. Procédé de détermination d'un taux de particules d'un matériau donné dans un échantillon d'air susceptible de comprendre des particules en suspension du matériau donné et d'autres matériaux, dans lequel ladite détermination est effectuée en temps réel simultanément à une exposition d'un individu audit air, et en continu, la détermination étant effectuée périodiquement au cours du temps, ledit procédé comprenant des étapes de :
E1 : mesure optique d'une signature de l'échantillon au moyen d'un compteur optique configuré pour effectuer un comptage particulaire, ladite signature de l'échantillon étant fonction d'une taille et d'un nombre des particules présentes dans l'échantillon et/ou d'une forme et d'un nombre des particules présentes dans l'échantillon, et ladite signature de l'échantillon comprenant un histogramme de répartition du nombre de particules dans l'échantillon en fonction de la taille des particules et/ou comprend un histogramme de répartition du nombre de particules dans l'échantillon en fonction de la forme des particules ;
E2 : identification par une unité de traitement (20) d'un type de l'échantillon au moyen de la signature de l'échantillon mesurée et au moyen :
- soit d'un modèle de classification de type des k plus proches voisins et d'une base de données d'apprentissage comprenant une pluralité de signatures de référence, chaque signature de référence étant associée à un type d'un échantillon de référence, l'identification du type de l'échantillon comprenant une comparaison de la signature de l'échantillon avec la pluralité de signatures de référence stockées dans la base de données d'apprentissage ;
- soit d'un modèle de classification de type réseau de neurones, machine à vecteur de support, algorithme du gradient stochastique, ou algorithme des forêts aléatoires, ledit modèle de classification étant entraîné sur une base de données d'apprentissage comprenant une pluralité de signatures de référence, chaque signature de référence étant associée à un type d'un échantillon de référence ; et
E3 : détermination par l'unité de traitement (20) du taux de particules du matériau donné dans l'échantillon à partir du type de l'échantillon identifié et d'une table de correspondance associant à chacun d'une pluralité de types d'échantillons de référence un taux de particules de référence du matériau donné.

2. Procédé de détermination d'un taux de particules selon la revendication 1, dans lequel le matériau donné est au moins l'un parmi de la silice cristalline alvéolaire, de poussières de ballast, de la chaux, des particules de diesel, des poussières de terre polluée, d'autres liants hydrauliques, des particules de Chrome VI, et/ou d'autres particules émises par différentes opérations de chantiers.

3. Procédé de détermination d'un taux de particules selon la revendication 1 ou la revendication 2, dans lequel la signature de l'échantillon mesurée à l'étape E1 est fonction d'un nombre de particules présentes dans l'échantillon, et d'une dimension des particules présentes dans l'échantillon dans la direction de plus grande dimension des particules ou des dimensions des particules présentes dans l'échantillon dans deux directions ou dans trois directions orthogonales formant un espace tridimensionnel, et dans lequel la signature de l'échantillon mesurée à l'étape E1 comprend un histogramme de répartition d'un nombre de particules dans l'échantillon en fonction de la dimension ou de l'une des dimensions des particules.

4. Procédé de détermination d'un taux de particules selon la revendication 3, dans lequel la forme des particules est déterminée en fonction de la ou des dimensions des particules mesurées dans la signature de l'échantillon.

5. Procédé de détermination d'un taux de particules selon l'une quelconque des revendications précédentes, dans lequel la signature de l'échantillon mesurée à l'étape E1 est en outre fonction d'une couleur des particules présentes dans l'échantillon et/ou de propriétés de diffraction des particules présentes dans l'échantillon, et dans lequel la signature de l'échantillon mesurée à l'étape E1 comprend un histogramme de répartition d'un nombre de particules dans l'échantillon en fonction de la couleur des particules et/ou comprend un histogramme de répartition du nombre de particules dans l'échantillon en fonction des propriétés de diffraction des particules.

6. Procédé de détermination d'un taux de particules selon l'une des revendications précédentes, dans lequel le type de l'échantillon identifié à l'étape E2 est défini par une nature de l'échantillon, correspondant à un matériau de l'échantillon de référence, et une activité d'obtention de l'échantillon, correspondant à une activité suite à laquelle l'échantillon de référence a été obtenu et/ou à un outil correspondant à ladite activité.

7. Procédé de détermination d'un taux de particules selon l'une des revendications précédentes, dans lequel la signature de l'échantillon est mesurée périodiquement à l'étape E1 à chaque période de mesure, le type de l'échantillon est identifié périodiquement à l'étape E2 à chaque période de calcul et le taux de particules est déterminé périodiquement à l'étape E3 à chaque période de calcul, dans lequel la période de calcul est égale ou supérieure à la période de mesure, dans lequel la période de mesure et la période de calcul sont comprises entre 1 seconde et 1 heure.

8. Procédé de détermination d'un taux de particules selon l'une des revendications précédentes, comprenant en outre une étape E4 de détermination par l'unité de traitement (20) d'une exposition aux particules du matériau donné à partir du taux de particules du matériau donné déterminé à l'étape E3 et d'un temps d'exposition auxdites particules du matériau donné.

9. Procédé de détermination d'un taux de particules selon la revendication 8, comprenant en outre une étape E5 d'alerte d'un utilisateur lorsque l'exposition aux particules du matériau donné dépasse un seuil d'exposition prédéterminé.

10. Système de détermination d'un taux de particules d'un matériau donné dans un échantillon d'air susceptible de comprendre des particules en suspension du matériau donné et d'autres matériaux, ledit système de détermination étant adapté pour effectuer une détermination en temps réel simultanément à une exposition d'un individu aux particules du matériau donné, et en continu, la détermination étant effectuée périodiquement au cours du temps, dans lequel ledit système comprend :
- un compteur optique (10) configuré pour effectuer un comptage particulaire et mesurer une signature d'un échantillon, ladite signature de l'échantillon étant fonction d'une taille et d'un nombre des particules présentes dans l'échantillon et/ou d'une forme et d'un nombre des particules présentes dans l'échantillon, et ladite signature de l'échantillon comprenant un histogramme de répartition d'un nombre de particules dans l'échantillon en fonction de la taille des particules et/ou comprend un histogramme de répartition d'un nombre de particules dans l'échantillon en fonction de la forme des particules ; et
- une unité de traitement (20) configurée pour :
- identifier un type de l'échantillon au moyen de la signature de l'échantillon mesurée et au moyen :
- soit d'un modèle de classification de type des k plus proches voisins et d'une base de données d'apprentissage comprenant une pluralité de signatures de référence, chaque signature de référence étant associée à un type d'un échantillon de référence, l'identification du type de l'échantillon comprenant une comparaison de la signature de l'échantillon avec la pluralité de signatures de référence stockées dans la base de données d'apprentissage ;
- soit d'un modèle de classification de type réseau de neurones, machine à vecteur de support, algorithme du gradient stochastique, ou algorithme des forêts aléatoires, ledit modèle de classification étant entraîné sur une base de données d'apprentissage comprenant une pluralité de signatures de référence, chaque signature de référence étant associée à un type d'un échantillon de référence, et
- déterminer le taux de particules du matériau donné dans l'échantillon, à partir du type de l'échantillon identifié et d'une table de correspondance associant à chacun d'une pluralité de types d'échantillons de référence un taux de particules de référence du matériau donné.

11. Système de détermination d'un taux de particules selon la revendication 10, dans lequel le compteur optique (10) est portatif.

12. Système de détermination d'un taux de particules selon la revendication 10 ou la revendication 11, comprenant en outre des moyens de stockage (30) configurés pour stocker les mesures effectuées par le compteur optique (10) et/ou la base de données d'apprentissage et/ou la table de correspondance.

## Patentansprüche

1. Verfahren zur Bestimmung eines Partikelanteils eines bestimmten Materials in einer Luftprobe, die suspendierte Partikel des bestimmten Materials und anderer Materialien umfassen könnte, wobei die Bestimmung in Echtzeit erfolgt, gleichzeitig mit einer Exposition eines Individuums gegenüber der Luft und kontinuierlich, wobei die Bestimmung im Laufe der Zeit periodisch durchgeführt wird, wobei das Verfahren folgende Schritte umfasst:
E1: optische Messung einer Signatur der Probe anhand eines optischen Zählers, der für eine Partikelzählung ausgelegt ist, wobei die Signatur der Probe von einer Größe und einer Anzahl der in der Probe vorhandenen Partikel und/oder von einer Form und von einer Anzahl der in der Probe vorhandenen Partikel abhängt, wobei die Signatur der Probe ein Verteilungshistogramm der Partikelanzahl in der Probe in Abhängigkeit von der Größe der Partikel umfasst und/oder ein Verteilungshistogramm der Partikelanzahl in der Probe in Abhängigkeit von der Form der Partikel umfasst;
E2: Identifizierung eines Typs der Probe durch eine Verarbeitungseinheit (20) anhand der gemessenen Signatur der Probe und anhand:
- entweder eines Klassifizierungsmodells des Typs der k-nächsten-Nachbarn und einer Lerndatenbank mit einer Vielzahl von Referenzsignaturen, wobei jede Referenzsignatur einem Typ einer Referenzprobe zugeordnet ist, wobei die Identifizierung des Typs der Probe einen Vergleich der Signatur der Probe mit der Vielzahl von Referenzsignaturen umfasst, die in der Lerndatenbank gespeichert sind;
- oder eines Klassifizierungsmodells vom Typ neuronales Netz, Support-Vektor-Maschine, stochastischer Gradientenalgorithmus oder Zufallswaldalgorithmus, wobei das Klassifizierungsmodell auf einer Lerndatenbank trainiert wird, die eine Vielzahl von Referenzsignaturen umfasst, wobei jede Referenzsignatur einem Typ einer Referenzprobe zugeordnet ist; und
E3: Bestimmung des Partikelanteils des bestimmten Materials in der Probe durch die Verarbeitungseinheit (20) anhand des identifizierten Probentyps und einer Zuordnungstabelle, die jedem von einer Vielzahl von Referenzprobentypen einen Referenzpartikelanteil des bestimmten Materials zuordnet.

2. Verfahren zur Bestimmung eines Partikelanteils nach Anspruch 1, wobei das bestimmte Material mindestens eins von dem alveolengängigen kristallinen Siliziumdioxid, Schotterstaub, Kalk, den Dieselpartikeln, dem kontaminierten Bodenstaub, den anderen hydraulischen Bindemitteln, Chrom-VI-Partikeln und/oder anderen Partikeln ist, die bei verschiedenen Arbeiten freigesetzt werden.

3. Verfahren zur Bestimmung eines Partikelanteils nach Anspruch 1 oder Anspruch 2, wobei die in Schritt E1 gemessene Signatur der Probe von einer Anzahl der in der Probe vorhandenen Partikel und von einer Größe der in der Probe vorhandenen Partikel in Richtung der größten Größe der Partikel oder der Größen der in der Probe vorhandenen Partikel in zwei Richtungen oder in drei orthogonalen Richtungen, die einen dreidimensionalen Raum bilden, abhängt, und wobei die in Schritt E1 gemessene Signatur der Probe ein Verteilungshistogramm einer Partikelanzahl in der Probe in Abhängigkeit von der Größe oder von einer der Größen der Partikel umfasst.

4. Verfahren zur Bestimmung eines Partikelanteils nach Anspruch 3, wobei die Form der Partikel in Abhängigkeit von der oder den in der Signatur der Probe gemessenen Größe(n) der Partikel bestimmt wird.

5. Verfahren zur Bestimmung eines Partikelanteils nach einem der vorstehenden Ansprüche, wobei die in Schritt E1 gemessene Signatur der Probe ferner von einer Farbe der in der Probe vorhandenen Partikel und/oder von Diffraktionseigenschaften der in der Probe vorhandenen Partikel abhängt, und wobei die in Schritt E1 gemessene Signatur der Probe ein Verteilungshistogramm einer Partikelanzahl in der Probe in Abhängigkeit von der Farbe der Partikel umfasst und/oder ein Verteilungshistogramm der Partikelanzahl in der Probe in Abhängigkeit von den Diffraktionseigenschaften der Partikel umfasst.

6. Verfahren zur Bestimmung eines Partikelanteils nach einem der vorstehenden Ansprüche, wobei der in Schritt E2 identifizierte Typ der Probe durch eine Beschaffenheit der Probe, die einem Referenzprobenmaterial entspricht, und einer Probenbeschaffungsaktivität, die einer Aktivität entspricht, durch die die Referenzprobe beschafft wurde, und/oder einem Werkzeug, das dieser Aktivität entspricht, definiert ist.

7. Verfahren zur Bestimmung eines Partikelanteils nach einem der vorstehenden Ansprüche, wobei die Signatur der Probe in Schritt E1 in jeder Messperiode periodisch gemessen wird, der Typ der Probe in Schritt E2 in jeder Berechnungsperiode periodisch identifiziert wird und der Partikelanteil in Schritt E3 in jeder Berechnungsperiode periodisch bestimmt wird, wobei die Berechnungsperiode gleich oder größer als die Messperiode ist, wobei die Messperiode und die Berechnungsperiode zwischen 1 Sekunde und 1 Stunde liegen.

8. Verfahren zur Bestimmung eines Partikelanteils nach einem der vorstehenden Ansprüche, das ferner einen Schritt E4 der Bestimmung einer Exposition gegenüber den Partikeln des bestimmten Materials durch die Verarbeitungseinheit (20) anhand des in Schritt E3 bestimmten Partikelanteils des bestimmten Materials und einer Expositionszeit gegenüber den Partikeln des bestimmten Materials umfasst.

9. Verfahren zur Bestimmung eines Partikelanteils nach Anspruch 8, das ferner einen Schritt E5 des Warnens eines Benutzers umfasst, wenn die Exposition gegenüber den Partikeln des bestimmten Materials einen vorgegebenen Expositionsschwellenwert überschreitet.

10. System zur Bestimmung eines Partikelanteils eines bestimmten Materials in einer Luftprobe, die suspendierte Partikel des bestimmten Materials und anderer Materialien umfassen könnte, wobei das Bestimmungssystem zur Durchführung einer Echtzeitbestimmung gleichzeitig mit einer Exposition eines Individuums gegenüber den Partikeln des bestimmten Materials und kontinuierlich durchzuführen, wobei die Bestimmung periodisch im Laufe der Zeit durchgeführt wird, wobei das System umfasst:
- einen optischen Zähler (10), der für eine Partikelzählung und eine Messung einer Signatur einer Probe ausgelegt ist, wobei die Signatur der Probe von einer Größe und einer Anzahl der in der Probe vorhandenen Partikel und/oder von einer Form und von einer Anzahl der in der Probe vorhandenen Partikel abhängt, und wobei die Signatur der Probe ein Verteilungshistogramm einer Partikelanzahl in der Probe in Abhängigkeit von der Größe der Partikel umfasst und/oder ein Verteilungshistogramm einer Partikelanzahl in der Probe in Abhängigkeit von der Form der Partikel umfasst; und
- eine Verarbeitungseinheit (20), die ausgelegt ist, um:
- einen Typ der Probe anhand der gemessenen Signatur der Probe zu identifizieren und anhand:
- entweder eines Klassifizierungsmodells des Typs der k-nächsten-Nachbarn und einer Lerndatenbank mit einer Vielzahl von Referenzsignaturen, wobei jede Referenzsignatur einem Typ einer Referenzprobe zugeordnet ist, wobei die Identifizierung des Typs der Probe einen Vergleich der Signatur der Probe mit der Vielzahl von Referenzsignaturen umfasst, die in der Lerndatenbank gespeichert sind;
- oder eines Klassifizierungsmodells vom Typ neuronales Netz, Support-Vektor-Maschine, stochastischer Gradientenalgorithmus oder Zufallswaldalgorithmus, wobei das Klassifizierungsmodell auf einer Lerndatenbank trainiert wird, die eine Vielzahl von Referenzsignaturen umfasst, wobei jede Referenzsignatur einem Typ einer Referenzprobe zugeordnet ist; und
- den Partikelanteil des bestimmten Materials in der Probe anhand des identifizierten Probentyps und einer Zuordnungstabelle, die jedem von einer Vielzahl von Referenzprobentypen einen Referenzpartikelanteil des bestimmten Materials zuzuordnen.

11. System zur Bestimmung eines Partikelanteils nach Anspruch 10, wobei der optische Zähler (10) tragbar ist.

12. System zur Bestimmung eines Partikelanteils nach Anspruch 10 oder Anspruch 11, das ferner Speichermittel (30) umfasst, die ausgelegt sind, um die von dem optischen Zähler (10) durchgeführten Messungen und/oder die Lerndatenbank und/oder die Zuordnungstabelle zu speichern.

## Claims

1. A method for determining an amount of particles of a given material in an air sample likely to include suspended particles of the given material and other materials, wherein said determination is carried out in real time simultaneously with an exposure of an individual to said air, and continuously, the determination being carried out periodically over time, in which the method comprises steps of:
E1: optically measuring a signature of the sample by means of an optical counter configured to perform particle counting, wherein said sample signature is a function of a size and number of particles present in the sample and/or a shape and number of particles present in the sample, and wherein said sample signature comprises a histogram of the distribution of the number of particles in the sample as a function of particle size and/or a histogram of the distribution of the number of particles in the sample as a function of particle shape;
E2: identifying, by means of a processing unit (20), a type of the sample by means of the measured sample signature and by means of :
- either a classification model of the k nearest neighbor type and a training database comprising a plurality of reference signatures, each reference signature being associated with a type of a reference sample, identification of the sample type comprising a comparison of the sample signature with the plurality of reference signatures stored in the training database ;
- or a classification model of the neural network, support vector machine, stochastic gradient algorithm or random forest algorithm type, said classification model being trained on a training database comprising a plurality of reference signatures, each reference signature being associated with a type of a reference sample; and
E3: determining, by means of the processing unit (20) the amount of particles of the given material in the sample based on the identified sample type and a correspondence table associating, with each of a plurality of reference sample types, a reference amount of particles of the given material.

2. The method for determining an amount of particles according to claim 1, wherein the given material is at least one of respirable crystalline silica, ballast dust, lime, diesel particles, polluted earth dust, other hydraulic binders, Chromium VI particles, and/or other particles emitted by various site operations.

3. The method for determining an amount of particles according to claim 1 or claim 2, wherein the signature of the sample measured in step E1 depends on a number of particles present in the sample, and on a dimension of the particles present in the sample in the direction of the greatest dimension of particles of the greatest dimensions of particles present in the sample in two directions or in three orthogonal directions forming a three-dimensional space, and wherein the signature of the sample measured in step E1 comprises a histogram of distribution of a number of particles in the sample as a function of the dimension or one of the dimensions of the particles.

4. The method for determining an amount of particles according to claim 3, wherein the shape of the particles is determined as a function of the dimension(s) of the particles measured in the sample signature.

5. The method for determining an amount of particles according to any one of the preceding claims, wherein the signature of the sample measured in step E1 further depends on a color of the particles present in the sample and/or diffraction properties of the particles present in the sample, and wherein the signature of the sample measured in step E1 comprises a histogram of distribution of a number of particles in the sample according to the color of the particles and/or a histogram of distribution of a number of particles in the sample according to the diffraction properties of the particles.

6. The method for determining an amount of particles according to one of the preceding claims, wherein the sample type identified in step E2 is defined by a nature of the sample, corresponding to a material of the reference sample, and an activity of producing the sample, corresponding to an activity following which the reference sample was produced and/or to a tool corresponding to said activity.

7. The method for determining an amount of particles according to one of the preceding claims, wherein the signature of the sample is measured periodically in step E1 at each measurement period, the type of the sample is periodically identified in step E2 at each calculation period and the amount of particles is determined periodically in step E3 at each calculation period, wherein the calculation period is equal to or greater than the measurement period, wherein the measurement period and the calculation period are comprised between 1 second and 1 hour.

8. The method for determining an amount of particles according to one of the preceding claims, further comprising a step E4 of determining, by means of the processing unit (20) an exposure to particles of the given material from the amount of particles of the given material determined in step E3 and a time of exposure to said particles of the given material.

9. The method for determining an amount of particles according to claim 8, further comprising a step E5 of alerting a user when the exposure to the particles of the given material exceeds a predetermined exposure threshold.

10. A system for determining an amount of particles of a given material in an air sample likely to include suspended particles of the given material and other materials, said determination system, said system for determining being adapted to carry out a determination in real time simultaneously with an exposure of an individual to the particles of the given material, and continuously, the determination being carried out periodically over time, and in which said system comprises:
- an optical counter (10) configured to perform particle counting adapted and measure a signature of a sample, said sample signature being a function of a size and number of particles present in the sample and/or a shape and number of particles present in the sample, and said sample signature comprising a histogram of the distribution of the number of particles in the sample as a function of particle size and/or a histogram of the distribution of the number of particles in the sample as a function of particle shape; and
- a processing unit (20) configured to:
- identify a type of the sample by means of the measured sample signature and by means of:
- either a classification model of the k nearest neighbor type and a training database comprising a plurality of reference signatures, each reference signature being associated with a type of a reference sample, identification of the sample type comprising a comparison of the sample signature with the plurality of reference signatures stored in the training database;
- or a classification model of the neural network, support vector machine, stochastic gradient algorithm or random forest algorithm type, said classification model being trained on a training database comprising a plurality of reference signatures, each reference signature being associated with a type of a reference sample; and
- determine the amount of particles of the given material in the sample based on the identified sample type and a correspondence table associating, with each of a plurality of reference sample types, a reference amount of particles of the given material.

11. The system for determining an amount of particles according to claim 10, wherein the optical counter (10) is portable.

12. The system for determining an amount of particles according to claim 10 of claim 11, further comprising storage means (30) configured to store the measurements made by the optical counter (10) and/or the training database and/or the correspondence table.
